# EUROPÄISCHE PATENTSCHRIFT

(11) **EP 1 770 607 B1**
(45) Veröffentlichungstag und Bekanntmachung des Hinweises auf die Patenterteilung: **12.05.2010**
(21) Anmeldenummer: 06120300.6
(22) Anmeldetag: 07.09.2006
(51) Int. Cl.: G06K 19/07, H04N 13/00, G01S 13/75

(54) **System und Verfahren zur Darstellung von Benutzerinformationen, insbesondere von Augmented-Reality-Informationen, mit Hilfe von in RFID-Datenspeichern hinterlegten Trackinginformationen**
System and method for displaying user information, in particular of augmented reality information, using tracking information stored in RFID data storage means
Système et procédé destinés à la représentation d'informations utilisateurs, en particulier d'informations de réalité augmentée, à l'aide d'information de recherche stockées dans une mémoire RFID

(30) Priorität: 29.09.2005 DE 102005046762
(43) Veröffentlichungstag der Anmeldung: 04.04.2007
(73) Patentinhaber: SIEMENS AKTIENGESELLSCHAFT, 80333 München (DE)
(72) Erfinder: Hamadou, Mehdi, 91052 Erlangen (DE); Jahn, Dirk, 91056 Erlangen (DE)

(56) Entgegenhaltungen:
- EP-A2- 1 647 869
- US-A1- 2004 176 143
- US-A1- 2004 183 751
- RASKAR R ET AL: "RFIG lamps: interacting with a self-describing world via photosensing wireless tags and projectors" ACM TRANSACTIONS ON GRAPHICS, ASSOCIATION FOR COMPUTING MACHINERY, NEW YORK, NY, US, Bd. 23, Nr. 3, 10. August 2004 (2004-08-10), Seiten 406-415, XP002348568 ISSN: 0730-0301

## Beschreibung

Die Erfindung betrifft ein System zur Darstellung von Augmented-Reality-Benutzerinformationen. Es weist eine Datenbrille auf Basis eines optischen Durchsichtverfahrens auf, welche eine Kamera zur Erfassung von Objekten als Bildinformationen eines Ausschnitts einer Umgebung sowie eine Anzeigevorrichtung zur lagerichtigen Einblendung der Benutzerinformationen in das Sichtfeld des Benutzers aufweist. Das System weist eine Bildverarbeitungseinheit zur Identifikation der erfassten Objekte und Rekonstruktion derer Abbilder in einem virtuellen dreidimensionalen Raum auf Basis von im System hinterlegten zugehörigen Trackinginformationen, zur Berechnung der Ortskoordinaten der jeweiligen Objekte, zur Ermittlung der Benutzerposition und dessen Blickwinkel auf die jeweiligen Objekte im virtuellen dreidimensionalen Raum und zur Zuordnung der Benutzerinformationen zu den Ortskoordinaten auf. Weiterhin weist das System zumindest einen mobilen Datenspeicher, welcher hierzu am jeweiligen zu erfassenden Objekt angebracht ist und ein Schreib-/Lesegerät zum berührungslosen Auslesen des Datenspeichers auf.

Die Erfindung betrifft zudem ein korrespondierendes Verfahren.

Aus der veröffentlichten US-Patentanmeldung US 2004/0183751 A1 ist ein System sowie ein Verfahren zum Detektieren von sichtbaren Markern in einem Sichtfeld einer von einem Arbeiter getragenen Kamera bekannt. Es werden umgebungsbezogene Daten mittels einer auf einem Durchsichtverfahren basierenden Anzeigevorrichtung eingeblendet. Nach einer Ausführungsform der dortigen Erfindung können anstelle der sichtbaren Marker berührungslos auslesbare RF-Tags verwendet werden. Nach einer weiteren Ausführungsform weist das System ein virtuelles Augmented-Reality-Trackingsystem zum Identifizieren der erfassten Objekte und zum Vergleich dieser mit im System hinterlegten Mustern auf.

Aus dem Fachaufsatz von RASKAR R. et al. "RFIG Lamps: Interacting with a self-describing world via photosensing wireless tags and projectors", ACM TRANSACTIONS ON GRAPHICS, ASSOCIATION FOR COMPUTING MACHINERY, NEW YORK, NY, US, Bd. 23, Nr. 3, 10. August 2004 (2004-08-10), Seiten 406-415, XP002348568, ISSN: 0730-0301, ist ein System mit einem tragbaren Projektor, einer Kamera, einem funkgestützten Schreib-/Lesegerät, mehreren Laserpointern und einem Gyroskop zur Bestimmung der räumlichen Lage des tragbaren Systems bekannt. Das System interagiert mit RF-Tags, welche an Objekte angebracht werden. Die RF-Tags weisen einen Photosensor auf. Jeder RF-Tag, der eine Zunahme der Helligkeit feststellt, sendet ein Signal, um dem System anzuzeigen, dass der Photosensor bzw. der RF-Tag im Lichtstrahl des Projektors liegt und kommunikationsbereit ist. Die Pixel des vom Projektor gesendeten Lichtstrahls sind während der Suchphase mit einem individuellen Gray-Code moduliert, so dass die relative Position eines sich mit dieser modulierten Helligkeit meldenden RF-Tags zum tragbaren Projektor durch die gleichfalls auf das projizierte Bild gerichtete Kamera pixelgenau ermittelt werden kann. Nach einem anderen Aspekt der dortigen Erfindung können mehrere RF-Tags an geometrisch signifikanten Stellen eines Objektes, wie z.B. an den Ecken eines Quaders, angeordnet sein. Im jeden dieser das Objekt real begrenzende RF-Tags sind 3D-Koordinaten Xᵢ aller signifikanten Stellen gespeichert. Durch Vergleich der mittels des Projektors und der Kamera ermittelten Koordinaten xᵢ mit den in den RF-Tags gespeicherten 3D-Koordinaten Xᵢ sind geometrische Veränderungen, wie z.B. Verformungen, erkennbar.

Aus der nachveröffentlichten europäischen Patentanmeldung EP 1 647 869 A2 ist ein Automatisierungssystem bekannt, bei dem Automatisierungskomponenten über integrierte RFID-Tags mit einem Speicher zur Speicherung von Identifikations- und Betriebsdaten verfügen. Die Automatisierungskomponenten verfügen weiterhin über integrierte RFID-Schreib-/Leseeinheiten, welche aktuelle Betriebs- und Prozessdaten auf den RFID-Tag schreiben können und Daten aus dem RFID-Tag lesen können. Weiterhin ist eine bewegliche RFID-Schreib-/Leseeinheit vorgesehen, mithilfe der Daten aus den RFID-Tags der Automatisierungskomponenten ausgelesen bzw. Daten in die Komponenten eingetragen werden können. Nach einer dortigen Ausführungsform können die RFID-Daten mit einer Datenbrille in das Sichtfeld des Benutzers eingeblendet werden. Eine lagerichtige nachverfolgende Einblendung im Sinne einer Augmented-Reality erfolgt nicht.

Aus der deutschen Offenlegungsschrift 10 2004 016 329 A1 ist ein System und ein Verfahren innerhalb eines Augmented-Reality-Systems zur Visualisierung von Simulationsergebnissen in einer gemischt virtuellen realen Umgebung bekannt. Das System bzw. Verfahren ermöglicht es einem oder mehreren Anwender(n), Simulationsprozesse im Kontext einer realen Umgebung, insbesondere im Bereich der industriellen Automatisierungstechnik, durchzuführen und deren statische und dynamische Ergebnisse im Kontext der realen Umgebung zu visualisieren. In der realen Umgebung ablaufende Prozesse werden erfasst und mit der Simulation synchronisiert. Mit Hilfe einer Steuerungseinheit wird eine wechselseitige Beeinflussung realer Prozesse mit der Simulation ermöglicht. Weiterhin kann der Anwender über eine Anwenderschnittstelle den Ablauf der Simulation steuern.

Aus der deutschen Patentschrift DE 101 41 521 C1 ist ein System sowie ein Verfahren zur Darstellung von Anwenderinformationen bekannt, bei welchem die gleichzeitige Darstellung von Anwenderinformationen und Bildinformationen einer Umgebung verbessert wird. Das System enthält eine Kamera zur Erfassung von Bildinformationen eines Ausschnitts einer Umgebung, wobei eine Zoomeinrichtung zur Änderung der Größe des erfassten Ausschnitts entsprechend eines Zoomfaktors und/oder eine Vorrichtung zur dreidimensionalen Ausrichtung der Kamera entsprechend eines Raumvektors vorgesehen ist, eine Rechnereinheit zur Berechnung von Ortskoordinaten der Bildinformationen anhand von Raumkoordinaten der Kamera und/oder den Steuergrößen Zoomfaktor und Raumvektor, zur Zuordnung von Anwenderinformationen zu den Ortskoordinaten und zur Berechnung von Positionen von Abbildern der Bildinformationen auf einer Anzeigefläche einer Visualisierungseinheit und eine Bildverarbeitungseinheit zur Aufbereitung der Bildinformationen und der Anwenderinformationen für eine Wiedergabe mit der Visualisierungseinheit und für eine lagerichtige Einblendung der Anwenderinformationen auf der Anzeigefläche an den Positionen der Abbilder der Bildinformationen mit Ortskoordinaten, denen die jeweiligen Anwenderinformationen zugeordnet sind.

Der technische Fachbegriff "Augmented Reality" bzw. in der entsprechenden deutschen Übersetzung "erweiterte Realität" ist eine mögliche Form der Mensch-Technik-Interaktion, mittels der Benutzerinformationen über eine Datenbrille in das Sichtfeld eines Benutzers oder Anwenders, wie z.B. einem Servicetechniker, mittels eines sogenannten "See-Through-Verfahrens" einblendet werden können. Bei dieser Technologie wird das Sichtfeld des Betrachters, d.h. des Benutzers, mit rechnergenerierten virtuellen Objekten angereichert, so dass Produkt- und Prozessinformationen intuitiv erfasst und genutzt werden können. Neben der sehr einfachen Interaktion zwischen Mensch und Computer erschließt der Einsatz tragbarer und leistungsfähiger Computer Anwendungsfelder der Augmented-Reality mit hohen Mobilitätsanforderungen. Dies ist z.B. in Produktionshallen, räumlich verteilten Anlagen oder großvolumigen Fördereinrichtungen der Fall. Ein Schwerpunkt dieser Technologie sind Produktions- und Serviceanwendungen.

Um die virtuelle Erweiterung des realen Sicht- oder Blickfelds möglichst positionsgenau zu erreichen, werden sogenannte Trackingverfahren, d.h. optische Nachführungsverfahren, eingesetzt. Diese Verfahren können sowohl als Hardwarekomponenten sowie aus Softwarekomponenten bestehen und auf optischen, inertialen, akustischen, magnetischen Verfahren etc. basieren. Bei den jeweiligen Verfahren werden unterschiedliche Algorithmen angewendet, die eine mehr oder minder genaue Bestimmung der Position des Benutzers erlauben.

Für den Einsatz in den Bereichen Industrie, Medizin sowie Konsum sind insbesondere die optischen Verfahren vorteilhaft, da für diese keine weiteren technischen Hilfsmittel benötigt werden. Für diese Verfahren werden auch entsprechende Eingangsinformationen zur Bestimmung der Benutzerposition benötigt. Diese können z.B. 3D-Modelle des betrachteten Objekts, Bilder oder Fotos des betrachteten Objekts aus verschiedenen Positionen sowie erkannte markante Punkte, Linien oder Farbverläufe sein. Durch Vergleich der in einem Informationssystem hinterlegten zugehörigen virtuellen Objekte mit den von einer an der Datenbrille angebrachten Kamera erfassten Objekten ist somit ein Rückschluss auf die Position des Benutzers und dessen Blickwinkel möglich. Mittels der optischen Verfahren ist es auch zur Laufzeit möglich, neue Bilder, Fotos, markante Punkte, Linien oder Farbverläufe eines Objekts zu erkennen und die Position der zugehörigen Objekte im virtuellen 3D-Raum zu rekonstruieren. Dies ist z.B. der Fall, wenn sich der Benutzer im realen Raum bewegt bzw. der Benutzer seinen Blickwinkel ändert. Mit Hilfe der laufend akquirierten Eingangsinformationen ist über weite Strecken eine Positionserkennung möglich. Die notwendigen computergestützten Graphikoperationen, wie z.B. Drehung der Objekte im virtuellen 3D-Raum oder optische Mustererkennung, können dabei recht umfangreich sein. Für diese besonderen Anforderungen kommen daher entsprechende Graphikprozessoren zum Einsatz.

Bei den optischen Verfahren ist zu beachten, dass sich die erfassten Objekte aufgrund des Arbeitsumfelds, sich ändernder Lichtverhältnisse oder einer geänderten Konfigurationen des jeweiligen Objekts ändern können. So können abhängig von der Beleuchtung eines Objekts unterschiedliche Farbverläufe an den betrachteten Objekten die Folge sein. Auch ist es möglich, dass sich die Objekte, wie z.B. ein Schaltschrank mit mehreren Einschubmöglichkeiten für Geräte, hinsichtlich ihrer Konfiguration ändern können. So können neue Teile oder Komponenten hinzugekommen sein oder auch entfernt worden sein. Diese Änderungen in der Umgebung eines Objekts wirken sich folglich auch auf das Trackingverfahren aus, so dass aktualisierte Daten von dem Informationssystem bereitgestellt werden müssen. Gegenwärtig wird dieses Problem der sich ändernden Umgebungsverhältnisse dadurch gelöst, dass manuell in die Konfiguration des Trackingverfahrens eingegriffen wird. Allerdings werden die auf die neuen Umgebungsverhältnisse angepassten Trackinginformationen nicht permanent gespeichert, so dass diese bei einem Neustart des Augmented-Reality-Systems nicht zur Verfügung stehen.

Nachteilig daran ist, dass nach einem Neustart die erforderlichen Trackinginformationen neu akquiriert werden müssen, bzw. sich das System neu an geänderte Umgebungsverhältnisse anpassen muss, so dass ein Benutzer nach einem Neustart eine gewisse Zeit warten muss, bis er das System nutzen kann.

Ein weiterer Nachteil ist, dass schon bei relativ langsamen Bewegungen bzw. Blickwinkeländerungen des Benutzers das System nicht mehr folgen kann. Entsprechend lange sind die Reaktionszeiten, bis sich das System wieder eingestellt hat.

Es ist somit eine Aufgabe der Erfindung, ein System sowie ein Verfahren zur Darstellung von Augmented-Reality-Benutzerinformationen anzugeben, welche ein schnelleres Tracking der Objekte erlauben.

Diese Aufgabe wird durch ein System zur Darstellung von Augmented-Reality-Benutzerinformationen mit den im Anspruch 1 angegebenen Merkmalen gelöst. Vorteilhafte Ausgestaltungen und Weiterbildungen der Erfindung ergeben sich aus den abhängigen Ansprüchen 2 bis 9.

Die Aufgabe wird durch ein korrespondierendes Verfahren zur Darstellung von Augmented-Reality-Benutzerinformationen mit den im Anspruch 10 angegebenen Merkmalen gelöst. Vorteilhafte Verfahrensvarianten ergeben sich aus den abhängigen Ansprüchen 11 bis 18.

Erfindungsgemäß sind auf dem zumindest einen mobilen Datenspeicher abgespeicherte 3D-Modelldaten der Objekte zum sofortigen möglichen Tracking der zu erfassenden Objekte, insbesondere nach einem Neustart des Systems oder bei schnellen Positions- und Blickwinkeländerungen, auslesbar.

Wesentliches Merkmal der Erfindung ist, dass die notwendigen Eingangsinformationen für das Tracking, wie z.B. 3D-Modelldaten, Bauteileigenschaften, Fotos, Umgebungsverhältnisse oder aktuelle Gerätekonfigurationen auf den mobilen Datenspeichern abgespeichert werden können, die dann bei Erfassung durch das Schreib-/Lesegerät ausgelesen und dem System sofort zur Verfügung gestellt werden können.

Der große Vorteil ist, dass neue Trackinginformationen sofort nach einem Neustart des Systems, bei schnellen Positions- und Blickwinkeländerungen oder bei sich ändernden Umgebungsverhältnissen ausgelesen und verarbeitet werden können. Einem Benutzer können dann auch sofort die zugehörigen Benutzerinformationen in dessen Sichtfeld eingeblendet werden.

Ein weiterer Vorteil ist, dass die Trackinginformationen nicht mehr lokal auf einem externen Gerät gespeichert werden müssen. Die notwendigen Informationen sind sozusagen dort hinterlegt, wo diese später benötigt werden, nämlich im Bewegungs- und Blickbereich des Benutzers. Anwendungen in den Bereichen Industrie, Medizin, Schulung oder Konsum können durch den Einsatz von mobilen Datenspeichern besonders effektiv unterstützt werden. Bei den Anwendungen kann es sich beispielsweise um Serviceanwendungen, Anwendungen zur Unterstützung bei einer Montage einer Anlage, Schulungsanwendungen oder dergleichen handeln.

Die im System vorgesehenen mobilen Datenspeicher, welche auch als RFID-Tags oder RFID-Transponder bezeichnet werden, können durch das Schreib-/Lesegerät in einem Bereich von wenigen Metern über eine Funkverbindung berührungslos ausgelesen werden. Dazu können die mobilen Datenspeicher als Chipkarte oder als elektronisches Etikett ausgebildet sein, welches an dem jeweiligen zu erfassenden Objekt angebracht ist.

Gemäß einer bevorzugten Ausführungsform ist der zumindest eine mobile Datenspeicher zum Beschreiben mit Daten, d.h. mit aktualisierten Trackinginformationen, ausgebildet. Dadurch können in vorteilhafter Weise vom System angepasste oder veränderte und somit aktualisierte Trackinginformationen mittels eines Schreibzugriffs auf dem dem jeweiligen Objekt zugeordneten mobilen Datenspeicher abgelegt werden. Es entfällt folglich auch das Ablegen der aktualisierten Trackinginformationen in einer externen Datenquelle. Ein sonst notwendiger späterer datentechnischer Abgleich kann entfallen. Sollte das Augmented-Reality-System von unterschiedlichen Benutzern genutzt werden, so ist weiterhin eine Speicherung der aktualisierten Trackinginformationen auf den mobilen Datenspeichern von Vorteil, da eine Verteilung der Daten auf unterschiedliche Systeme entfallen kann. Darüber hinaus ist ein Abgleich der Trackinginformationen mit unterschiedlichen Augmented-Reality-Systemen bei jeweils unterschiedlichen Benutzern überflüssig.

Das System kann gemäß einer weiteren Ausführungsform mit anderweitig verfügbaren datentechnischen Informationssystemen zur Erfassung von weiteren Trackinginformationen verbunden sein. Für den Fall, dass noch keine Informationen auf einem mobilen Datenspeicher abgelegt sein sollten, wie z.B. bei einer Erstinbetriebnahme eines Augmented-Reality-Systems, können die Trackinginformationen auch aus einem bereits bestehenden Informationssystem, wie z.B. von einem sogenannten Legacy-System, bezogen werden. Diese Informationen können dann in die jeweiligen mobilen Datenspeicher einprogrammiert werden. Unter dem Begriff Legacy-System ist dabei ein bereits im jeweiligen Anwendungsbereich vorhandenes EDV-Informationssystem zu verstehen. Im Bereich der Automatisierungstechnik können diese z.B. CAD-Systeme sein, aus welchen 3D-Modelle eines zu erkennenden Objekts datentechnisch ausgeleitet bzw. exportiert werden können.

Alternativ können auf einem mobilen Datenspeicher eine Kennung oder mehrerer Kennungen hinterlegt sein, welche das jeweilige Objekt und ggf. weitere in der Umgebung des Objekts vorhandene weitere Objekte kennzeichnen. Anhand der jeweiligen Kennung kann das System dann die zur jeweiligen Kennung gehörenden Trackinginformationen laden. Dadurch können vorzugsweise Read-Only-Datenspeicher verwendet werden, die nur ausgelesen und nicht beschrieben zu werden brauchen, aber gegenüber auslesbaren und beschreibbaren mobilen Datenspeichern einen technisch erheblich vereinfachten Aufbau aufweisen. Üblicherweise weisen Read-Only-Datenspeicher bereits eine eindeutige Signatur als Kennung auf, die zyklisch gesendet wird und die im Erfassungsbereich des Schreib-/Lesegeräts empfangen werden kann. Wird einer solchen Kennung ein Speicherbereich im System zugeordnet, so kann dieser für das Tracking ausgelesen und ggf. mit aktualisierten Trackinginformationen beschrieben werden. Auf diesen Speicherbereich können dann ggf. auch mehrere Augmented-Reality-Systeme zugreifen. Dabei kann es vorteilhaft sein, diesen Speicherbereich in Form eines externen Speichermediums auszubilden, welches über eine Funkverbindung vom jeweiligen Augmented-Reality-System erreicht werden kann. Eine solche Funkverbindung kann z.B. auf einem WLAN-, Bluetooth- oder DECT-Standard basieren.

Dadurch, dass ein mobiler Datenspeicher auch Trackinginformationen von weiteren Objekten aufweisen kann, die sich in Umgebung des den mobilen Datenspeicher tragenden Objekts befinden, kann die Anzahl von mobilen Datenspeichern auf ein notwendiges Maß reduziert werden. Dadurch verringert sich der Gesamtaufwand für ein erfindungsgemäßes System in vorteilhafter Weise.

Die Trackinginformationen weisen vorzugsweise 3D-Modelldaten und/oder Fotos und/oder charakteristische Merkmale der jeweiligen Objekte auf. Wie eingangs beschrieben, können die 3D-Modelldaten z.B. aus einem CAD-System ausgeleitet werden. Derartige Entwicklungs- und Konstruktionswerkzeuge werden üblicherweise bei der Projektierung von Produkten und Anlagen sowieso eingesetzt, so dass keine gesonderten Aufwendungen anfallen. Es können aber auch Fotoaufnahmen des jeweiligen Objekts oder aus dem CAD-System optisch aufbereitete Bilder herangezogen werden, die dem realen Objekt fotorealistisch nahe kommen. Vorzugsweise werden mehrere relevante Seiten eines Objekts, wie z.B. die Front- oder Seitenflächen eines Schaltschranks, abgespeichert. Trackinginformationen können aber auch charakteristische Merkmale, wie z.B. Ecken, Kanten, Farbverläufe, Helligkeitsverläufe oder signifikante Partien eines Objekts sein.

Gemäß einer weiteren Ausführungsform weisen die Trackinginformationen Konfigurationsdaten auf, welche Änderungen des jeweiligen Objekts hinsichtlich dessen Konfiguration kennzeichnen. Die Konfigurationsdaten können z.B. Informationen darüber enthalten, wie viele und welche Teilobjekte zu der Konfiguration eines Geräts gehören. Fehlende Teile oder neu hinzugekommene Teile können entsprechend angezeigt werden, so dass das System aus diesen nun bekannten Änderungen auch ein geändertes virtuelles Abbild des Geräts bzw. des Objekts rekonstruieren kann.

In einer besonderen Ausführungsform des Systems weisen die Trackinginformationen Umgebungsparameter auf, anhand derer in Abhängigkeit von den jeweils vorliegenden Umgebungsbedingungen des jeweiligen Objekts geeignete 3D-Modelldaten und/oder Fotos und/oder charakteristische Merkmale ausgewählt werden können. Die Umgebungsparameter, wie z.B. die Helligkeit oder Beleuchtungsrichtung, können von Anwendungsgebiet zu Anwendungsgebiet unterschiedlich sein. So liegen z.B. in einer Fabrik gänzlich andere Beleuchtungsverhältnisse vor als in einer Anlage im Freien oder in einer medizinischen Einrichtung. Zu den jeweiligen Umgebungsparametern können dann verschiedene Datensätze von dann zu erwartenden Fotos, Bildern, Helligkeits- und Farbverläufen hinterlegt sein. Das Trackingsystem kann dann folglich den möglichst passenden Datensatz auswählen.

In einer bevorzugten und besonders vorteilhaften Ausführungsform der Erfindung weist das System eine Bewertungseinheit zur Analyse der aktuellen Umgebungsbedingungen auf. Zudem weist das System das Bildverarbeitungssystem zum Auslesen von entsprechend dazu geeigneten Trackinginformationen aus dem zumindest einen mobilen Datenspeicher und/oder zum Beschreiben des zumindest einen mobilen Datenspeichers mit an die aktuellen Umgebungsbedingungen angepassten Trackinginformationen mittels des Schreib-/Lesegeräts auf. Mittels der Bewertungseinheit werden die Umgebungsbedingungen analysiert. Diese Analyse kann z.B. mittels geeigneter Sensorik, wie z.B. mittels eines Helligkeitssensors, Sensoren zur Ermittlung der Lichtquellen sowie deren Farbtemperatur, erfolgen. Dadurch können zum einen vorteilhaft die Trackinginformationen zusammen mit den entsprechenden Umgebungsparametern auf dem mobilen Datenspeicher abgelegt und zum anderen an die jeweiligen Umgebungsparameter angepasste Trackinginformationen akquiriert werden.

Dies hat den Vorteil, dass das System bzw. die Trackingverfahren sich nicht erneut an neue Umgebungsbedingungen adaptieren müssen. Ein derartiges System bzw. Trackingverfahren kann folglich auch als ein lernendes System bzw. Verfahren angesehen werden. Dadurch verbessern sich die Verarbeitungsgeschwindigkeit und die Performance des Gesamtssystems erheblich.

Die Datenübertragung zwischen dem Schreib-/Lesegerät und dem zumindest einen mobilen Datenspeicher basiert vorzugsweise auf Mikrowellen. Im Gegensatz zu induktiv gekoppelten mobilen Datenspeichern, welche nur aus einer Entfernung von wenigen Zentimetern ausgelesen und beschrieben werden können, ist hier eine Datenübertragung über eine Entfernung von mehreren Metern möglich. Solche Schreib-/Lesegeräte und mobile Datenspeicher sind z.B. in der Norm ISO/IEC 18000 zum Betrieb in einem ISM-Frequenzband beschrieben. Dabei sind bestimmte Frequenzbänder für Anwendungen in der Industrie, Wissenschaft sowie im medizinischen Bereich freigegeben (ISM = Industrial, Scientific & Medical).

In einer weiteren Ausführungsform weist das Schreib-/Lesegerät einen gerichteten Erfassungsbereich auf. Dies wird zum Beispiel durch Einsatz einer sogenannten Patch-Antenne im Schreib-/Lesegerät erreicht, die zugleich als Sende- und Empfangsantenne dient. Wird das Schreib-/Lesegerät so am Körper bzw. am Kopf des Benutzers angebracht, dass der Blickwinkel bzw. die Ausrichtung des Sichtfeldes des Benutzers in etwa der Ausrichtung der länglichen Empfangs- und Sendekeule des Schreib-/Lesegeräts entspricht, so werden vorteilhaft nur die im Blickfeld des Benutzers befindlichen Objekte mit den entsprechenden mobilen Datenspeichern abgefragt. Neben der dann sehr schnellen Identifikation der Objekte ist zudem die zugehörige Benutzerinformation sofort lagerichtig in das Sichtfeld des Benutzers einblendbar.

Gemäß einer weiteren Ausführungsform ist das erfindungsgemäße System ein am Körper des Benutzers tragbarer Computer, wie z.B. ein PDA (Personal Digital Assistant) oder ein sogenannter PALM-Computer. In diesen Computern kann auch das Schreib-/Lesegerät integriert bzw. als Modul eingesteckt sein.

Das System kann zudem eine Datenbrille auf Basis eines optischen Durchsichtverfahrens aufweisen, welche die Kamera zur Erfassung der Objekte umfasst und welche die Benutzerinformationen lagerichtig in das Sichtfeld des Benutzers einblenden kann. Dabei wird das Bild einer optischen Anzeigevorrichtung, wie z.B. eines LCD- oder TFT-Displays, über optische Mittel virtuell vor das Auge des Benutzers eingeblendet.

Schließlich wird die Aufgabe gelöst mit einer Datenbrille auf Basis eines optischen Durchsichtverfahrens, welche ein erfindungsgemäßes System zur Darstellung von Benutzerinformationen aufweist. In diesem Fall sind sämtliche Bestandteile des Systems wie Bildverarbeitungseinheit, Visualisierungseinheit und Schreib-/Lesegerät in die Datenbrille integriert. Die Datenbrille kann darüber hinaus auch eine Funkschnittstelle aufweisen, wie z.B. auf Basis eines WLAN-, Bluetooth- oder DECT-Standards, um Daten mit einem externen Speichermedium und/oder mit einem Legacy-System auszutauschen.

Weitere vorteilhafte Eigenschaften der Erfindung ergeben sich aus deren beispielhafter Erläuterung anhand der Figuren. Es zeigt
- FIG 1: einen Benutzer mit einer beispielhaften Datenbrille und einer in das Sichtfeld eingeblendeten Benutzerinformation eines beispielhaft erfassten Objekts in Form eines Schaltschranks,
- FIG 2: einen beispielhaften Aufbau eines Systems zur Darstellung von Benutzerinformationen gemäß der Erfindung,
- FIG 3: beispielhafte Ausgestaltungen eines Schreib-/Lesegeräts gemäß der Erfindung,
- FIG 4: einen beispielhaften Aufbau eines mobilen Datenspeichers, welcher mit einem Schreib-/Lesegerät Daten austauscht und
- FIG 5: eine beispielhafte Speicherbelegung eines mobilen Datenspeichers mit Trackinginformationen.

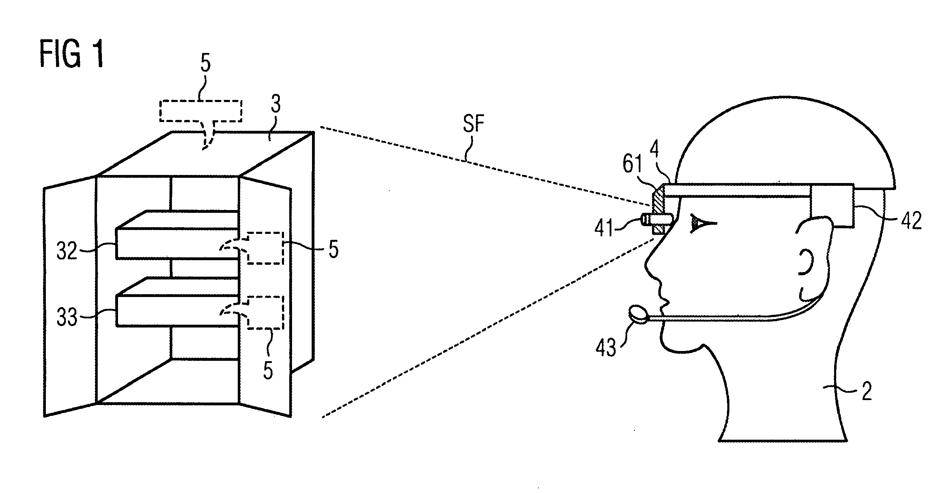

FIG 1 zeigt einen Benutzer 2 mit einer beispielhaften Datenbrille 4 und einer in das Sichtfeld SF eingeblendeten Benutzerinformation 5 eines beispielhaft erfassten Objekts 3 in Form eines Schaltschranks. Die Datenbrille 4 ist nach einem optischen Durchsichtverfahren bzw. einem sogenannten "Optical See-Through-Verfahrens" ausgebildet. Mit dem Bezugszeichen 41 ist eine elektronische Kamera bezeichnet, welche mit einem Steuergerät 42 der Datenbrille 4 verbunden ist. Vorzugsweise weist die Kamera eine Optik auf, die so ausgebildet ist, dass das Sichtfeld der Kamera 4 im Wesentlichen mit dem Sichtfeld SF des Benutzers 2 übereinstimmt. Die Datenbrille 4 weist weiterhin eine Anzeigevorrichtung 61 auf, mittels der das virtuelle computergenerierte Bild eingeblendet wird. Aus Gründen der Übersichtlichkeit sind die hierzu notwendigen optischen Hilfsmittel, wie z.B. Spiegel, nicht dargestellt. Weiterhin ist an der Datenbrille 4 ein Mikrophon 43 angebracht. Mittels einer Spracheingabe kann dann der Benutzer kontextsensitiv weitere Benutzerinformationen einblenden lassen. Die Steuerung der Ausgabe von Benutzerinformationen 5 kann z.B. menügeführt erfolgen. Anstelle eines Mikrophons 43 können natürlich auch andere Eingabemedien, wie z.B. eine Maus oder eine Tastatur, herangezogen werden. Doch bietet dabei die Spracheingabe die Möglichkeit, Sprachbefehle zur Steuerung der Ausgabe der Benutzerinformationen 5 einzugeben, ohne hierzu die Hände verwenden zu müssen. Dies ist z.B. bei einer Montage einer Anlage oder einer Maschine vorteilhaft. So können beide Hände für die Montage von Teilkomponenten benutzt werden und zugleich Benutzerinformationen als Montageanleitung für die gerade einzubauende Teilkomponente angefordert werden.

Im linken Teil der FIG 1 ist ein beispielhafter Schaltschrank 3 mit zwei Einschubgeräten 32, 33 dargestellt, welcher z.B. im Rahmen einer Schulung oder einer Inspektion begutachtet wird. Mit dem Bezugszeichen 5 sind Benutzerinformationen in Form gestrichelter Sprechblasen bezeichnet, die in das Sichtfeld SF des Benutzers 2 eingeblendet sind. Bei den Benutzerinformationen 5 kann es sich z.B. um eine Beschreibung der Funktion und des Ausrüstungszustands des Schaltschranks 3 bzw. der Einschubgeräte 32, 33 als Teilobjekte des Schaltschranks 3 handeln.

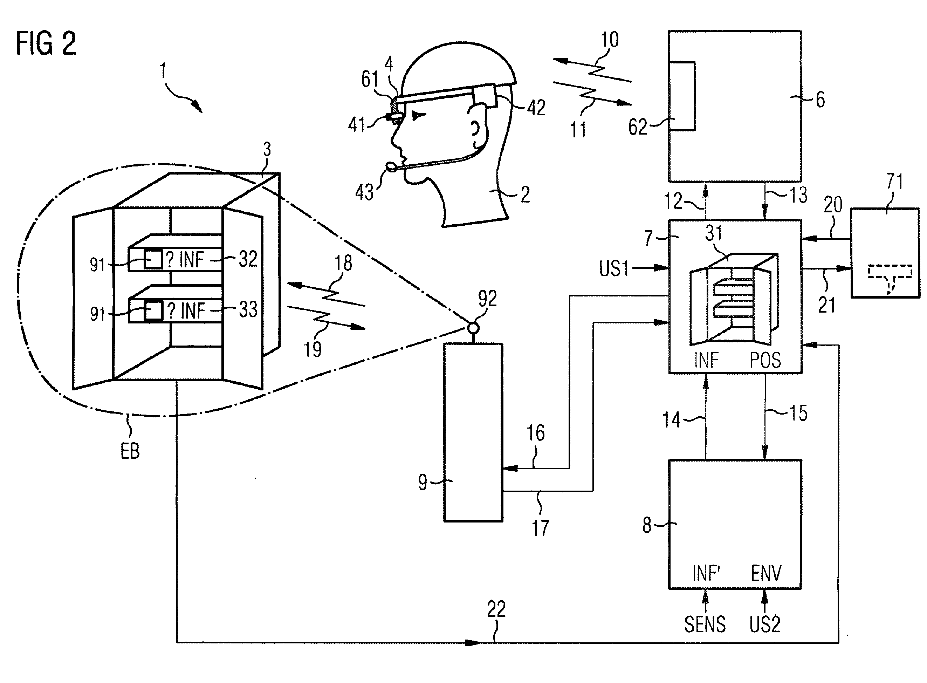

FIG 2 zeigt einen beispielhaften Aufbau eines Systems 1 zur Darstellung von Benutzerinformationen 5 gemäß der Erfindung. In etwa der Bildmitte ist wieder der Benutzer 2 dargestellt, in dessen Sichtfeld der Schaltschrank 3 aus dem Beispiel der FIG 1 zu sehen ist.

Unterhalb der Darstellung des Benutzers 2 ist ein Schreib-/Lesegerät 9 dargestellt, welches gemäß der Erfindung zum berührungslosen Auslesen von Trackinginformationen INF aus zumindest einem mobilen Datenspeicher 91 dient. Im Beispiel der FIG 1 ist je ein mobiler Datenspeicher 91 an einem Einschubgerät 32, 33 angebracht ist, so dass eine Identifikation des jeweiligen Objekts 3, 32, 33 durch das System 1 möglich ist. Das Schreib-/Lesegerät 9 weist eine Antenne 92 mit einem gerichteten keulenförmigen Erfassungsbereich EB auf, so dass die im Erfassungsbereich EB befindlichen mobilen Datenspeicher 91 im Schaltschrank 3 gemäß der Erfindung mit ihren jeweiligen Trackinginformationen INF ausgelesen werden können bzw. mit aktualisierten Trackinginformationen beschrieben werden können. Die beiden blitzförmig dargestellten Pfeile 18, 19 sollen den auf Funk basierenden Datenfluss zwischen Schreib-/Lesegerät 9 und den mobilen Datenspeichern 91 symbolisieren.

Im rechten Teil der FIG 2 ist eine Bildverarbeitungseinheit 7 zur Identifikation der erfassten Objekte 3, 32, 33 und zur Rekonstruktion derer Abbilder 31 in einem virtuellen dreidimensionalen Raum auf Basis von im System hinterlegten zugehörigen Trackinginformationen INF dargestellt. Weiterhin dient die Bildverarbeitungseinheit 7 zur Berechnung von Ortskoordinaten der jeweiligen Objekte 3, 32, 33, zur Ermittlung der Benutzerposition und dessen Blickwinkel auf die jeweiligen Objekte 3, 32, 33 sowie zur Zuordnung von Benutzerinformationen 5 zu den Ortskoordinaten POS bzw. zu den entsprechenden Objekten 3, 32, 33. Die Ortskoordinaten POS sowie die ausgelesenen oder anderweitig akquirierten Trackinginformationen INF können in einem nicht weiter dargestellten elektronischen Speicher der Bildverarbeitungseinheit 7 abgelegt werden.

Über zwei Datenverbindungen 16, 17 ist die Bildverarbeitungseinheit 7 mit dem Schreib-/Lesegerät 9 verbunden, so dass die von den mobilen Datenspeichern 91 stammenden Trackinginformationen INF eingelesen werden können, wobei das Schreib-/Lesegerät 9 selbständig die Trackinginformationen INF erfasst, sobald ein mobiler Datenspeicher 91 im Erfassungsbereich EB detektiert wird. In umgekehrter Weise können geänderte oder aktualisierte Trackinginformationen INF', wie z.B. durch geänderte Umgebungsverhältnisse, über das Schreib-/Lesegerät in den jeweiligen mobilen Datenspeicher 91 eingeschrieben werden.

Die Bildverarbeitungseinheit 7 ist über zwei Datenverbindungen 20, 21 mit einem Speicher 71 zum Laden bzw. zum Speichern von Benutzerinformationen 5 verbunden. Die Datenverbindungen 20, 21 können dabei leitungsgebunden sein oder auf Funk basieren. Die Benutzerinformationen 5 werden von der Bildverarbeitungseinheit 7 kontextsensitiv auf Basis von dort eingehenden Benutzerbefehlen US1, wie z.B. über die Sprachbefehle, ausgewählt und graphisch aufbereitet.

Im rechten unteren Teil der FIG 2 ist eine Bewertungseinheit 8 gemäß der Erfindung dargestellt. Mittels dieser Bewertungseinheit 8 erfolgt eine Analyse der Umgebung im Bereich der Objekte 3, 32, 33. Die Bewertung kann automatisiert über dort eingehende Sensorsignale SENS oder über manuelle Benutzereingriffe US2, wie z.B. über eine Tastatur, erfolgen. Die nicht weiter dargestellten Sensoren können z.B. auf einer Außenseite der Bewertungseinheit 8 angebracht sein. Die aufgrund der geänderten Umgebungsbedingungen neu oder modifiziert vorliegenden Trackinginformationen INF' werden dann zusammen mit einem zugehörigen Umgebungsparameter ENV, wie z.B. einem Helligkeitswert, Lichtfarbwert oder Koordinaten und Beleuchtungsrichtung einer Lichtquelle, an die Bildverarbeitungseinheit 7 übertragen. Die Bildverarbeitungseinheit 7 generiert daraus verschiedene Datensätze von 3D-Modellen, Bildern, Fotos, charakteristischen Merkmalen, etc., als Trackinginformationen INF und als Funktion des jeweiligen Umgebungsparameters ENV.

Im oberen rechten Teil der FIG 2 ist eine Visualisierungseinheit 6 dargestellt, welche über Datenverbindungen 12, 13 mit der Bildverarbeitungseinheit 7 und über beispielhafte Funkdatenverbindungen mit einem Steuergerät 42 mittels einer Datenschnittstelle 62 verbunden ist. Die Visualisierungseinheit 6 umfasst weiterhin die Anzeigevorrichtung 61 zur optischen Einblendung der Benutzerinformationen 5. Die Visualisierungseinheit 6 kann aber auch bereits in der Datenbrille 6 integriert sein. Des Weiteren können auch die Bildverarbeitungseinheit 7 sowie die Bewertungseinheit 8 in der Datenbrille 4, insbesondere im Steuergerät 42, integriert sein. In diesem Fall können die Sensoren der Bewertungseinheit 8 an der Außenseite des Steuergeräts 42 der Datenbrille 4 bzw. des Systems 1 angebracht sein. Da zu jedem Zeitpunkt die Benutzerposition und dessen Blickwinkel vom System 1 ermittelt werden kann, können insbesondere aufgrund des festen räumlichen Bezugs zwischen der am Steuergerät 42 angebrachten Sensorik und dem Blickwinkel des Benutzers 2 auch die Koordinaten und Beleuchtungsrichtung von Lichtquellen als Umgebungsparameter ENV ermittelt werden.

Schließlich zeigt FIG 2 eine Prozessanbindung 22 zum Schaltschrank 3, wobei der Schaltschrank 3 stellvertretend für Prozess-, Anlagen- oder Automatisierungskomponenten steht. Über diese Prozessanbindung 22 können geänderte Zustände oder Prozesswerte, wie z.B. Temperatur und Drehzahl, objektbezogen an die Bildverarbeitungseinheit 7 übermittelt werden. Abhängig von diesen Werten kann dann eine geänderte Einblendung von Benutzerinformationen 5 vorgenommen werden, wie z.B. die Hervorhebung einer Benutzerinformation mit einem größeren Helligkeitswert, wenn eine Statusmeldung des Prozesses als überwachungsbedürftig oder kritisch eingestuft wurde.

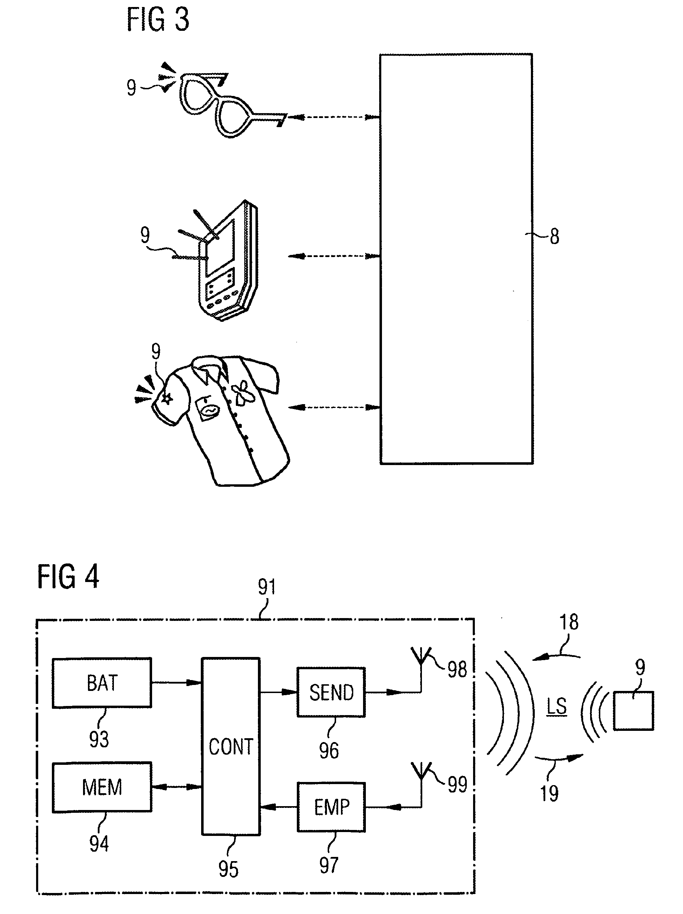

FIG 3 zeigt beispielhafte Ausgestaltungen eines Schreib-/Lesegeräts gemäß der Erfindung. Im oberen Teil der FIG 3 ist symbolisch eine Datenbrille dargestellt, in welcher ein Schreib-/Lesegerät 9 integriert ist. Der besondere Vorteil dabei ist, dass der Erfassungsbereich des integrierten Schreib-/Lesegeräts 9 und der das Sichtfeld definierende Blickwinkel in etwa übereinstimmen, so dass nur die im Blickfeld des Benutzers befindlichen Objekte mit den entsprechenden mobilen Datenspeichern abgefragt bzw. ausgelesen werden.

Im mittleren Teil der FIG 3 ist ein tragbarer Computer, insbesondere ein PDA (Personal Digital Assistant), dargestellt, bei welchem das Schreib-/Lesegerät 9 integriert ist. Der besondere Vorteil dabei ist, dass manuelle Eingaben über den tragbaren Computer zur Steuerung oder zur Einstellung des Systems vorgenommen werden können. Der tragbare Computer kann zudem am Körper des Benutzers fixiert werden und darüber hinaus alle Funktionsbausteine des Systems beinhalten. Über Kabel oder Funk kann eine datentechnische Verbindung mit der Datenbrille hergestellt werden.

Im unteren Teil der FIG 3 ist ein Beispiel für ein in ein Kleidungsstück integriertes Schreib-/Lesegerät 9 dargestellt. Dabei sind die jeweiligen Komponenten des Schreib-/Lesegeräts 9 flexibel ausgestaltet. Der Vorteil dabei ist, dass kein separates Schreib-/Lesegerät 9 vom Benutzer mitgeführt werden muss.

FIG 4 zeigt einen beispielhaften Aufbau eines mobilen Datenspeichers 91, welcher mit einem Schreib-/Lesegerät 9 über eine Luftschnittstelle LS Daten austauscht. Die jeweilige funkgestützte Datenverbindung ist mit den Bezugszeichen 18, 19 gekennzeichnet. Der mobile Datenspeicher 91 weist eine Batterie 93 zur Stromversorgung, einen Speicher 94 zumindest zur Ablage der Trackinginformationen INF, eine Datensendeeinheit 96, eine Datenempfangseinheit 97 sowie einen Controller 95 in Form eines Mikrocontrollers auf. Im Beispiel der FIG 4 weist der mobile Datenspeicher 91 zudem eine Sendeantenne 98 und eine Empfangsantenne 99 auf. Die beiden Antennen 98, 99 können aber auch als eine gemeinsame Sende- und Empfangsantenne ausgebildet sein. Der mobile Datenspeicher 91 ist vorzugsweise zum Senden und zum Empfang von Daten im Mikrowellenbereich ausgebildet, wie z.B. in einem freigegebenen ISM-Frequenzband von 2,54 GHz. Zudem sind die mobilen Datenspeicher 91 als sogenannte Backscatter-Datenspeicher ausgebildet, welche einen besonders geringen Strombedarf aufweisen. Auf diese Weise ist ein betrieblicher Einsatz von mehreren Jahren möglich.

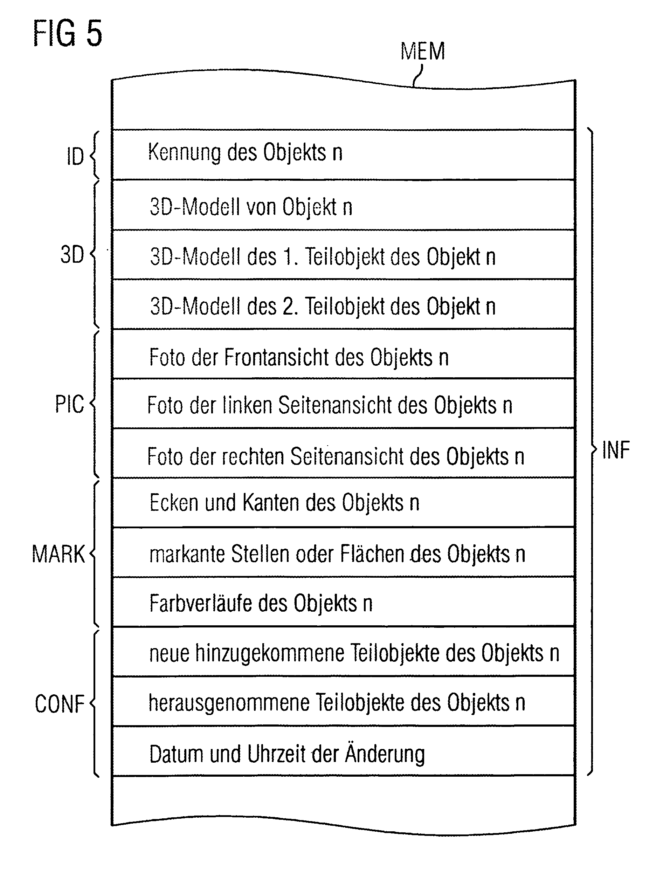

FIG 5 zeigt eine beispielhafte Speicherbelegung eines mobilen Datenspeichers 91 mit Trackinginformationen INF. Die FIG 5 zeigt einen Ausschnitt aus dem gesamten Speicherbereich MEM des mobilen Datenspeichers 91. Die erste Zeile dient beispielhaft als Platzhalter für eine Kennung ID eines Objekts. Dies kann z.B. eine binäre kodierte mehrstellige Zahl sein. Die Kennung ID kann darüber hinaus auch weitere Kennungen oder Unterkennungen aufweisen, die weitere in der Umgebung des Objekts befindliche Objekte und/oder Teilobjekte, wie z.B. Unterbaugruppen des Objekts, kennzeichnen. Insbesondere sind die Kennungen ID einzigartig, so dass eine eindeutige Zuordnung möglich ist. Einer solchen Kennung ID kann z.B. ein Speicherbereich im System 1 oder in einem Legacy-System zugeordnet sein, so dass von dort die für das Tracking notwendigen Daten ausgelesen werden können bzw. aktualisierte Trackinginformationen INF in den Speicherbereich eingeschrieben werden können. Auf diesen Speicherbereich können dann ggf. auch mehrere Augmented-Reality-Systeme beispielsweise über eine Funkverbindung zugreifen.

In den nachfolgenden drei Zeilen sind beispielhaft 3D-Modelldaten 3D des Objekts und 3D-Modelldaten der Teilobjekte abgelegt. Aus diesen Modelldaten ist durch das System eine dreidimensionale virtuelle Rekonstruktion des betreffenden Objekts bzw. der Teilobjekte möglich, anhand derer erfasste Bildinformationen eines Objekts verglichen werden können. Die 3D-Modelldaten 3D können auch als Datensatz mit einer Vielzahl von einem Umgebungsparameter abhängigen 3D-Modelldaten organisiert sein.

Die weiteren nachfolgenden drei Zeilen dienen der Ablage von Fotos PIC der betrachtungsmäßig relevanten Seiten eines Objekts, wie z.B. der Frontseite sowie der rechten und linken Seite. Die Fotos PIC können z.B. von einer digitalen Kamera stammen. Weiterhin können die Fotos PIC auch als Datensatz mit einer Vielzahl von einem Umgebungsparameter abhängigen Fotodaten organisiert sein. Dies können z.B. Fotos einer Frontseite des Objekts unter einem verschiedenen Beleuchtungswinkel oder bei unterschiedlichen Helligkeitswerten sein.

Die weiteren nachfolgenden beispielhaften drei Zeilen dienen zur Ablage von charakteristischen Merkmalen MARK, wie z.B. von markanten Stellen oder Flächen des betreffenden Objekts sowie Ecken, Kanten oder charakteristische Farb- und Helligkeitsverläufe am Objekt. Die charakteristischen Merkmale MARK können auch als Datensatz mit einer Vielzahl von einem Umgebungsparameter abhängigen charakteristischen Merkmalen organisiert sein.

Schließlich dienen die beispielhaft letzten drei Zeilen der Speicherbelegung MEM für die Trackinginformationen INF zur Ablage von Konfigurationsdaten CONF. Diese Daten können neu hinzugekommene oder herausgenommene Teilobjekte des betreffenden Objekts anzeigen. Zudem können die Versionsnummer oder der Änderungsstand des Objekts mit Datum und Uhrzeit abgespeichert werden.

Zusammenfassend weist das Augmented-Reality-System eine Kamera zur Erfassung von Objekten eines Umgebungsausschnitts, eine Bildverarbeitungseinheit zur Identifikation erfasster Objekte und Rekonstruktion derer Abbilder in einem virtuellen dreidimensionalen Raum auf Basis von im System hinterlegten zugehörigen Trackinginformationen, zur Berechnung der Ortskoordinaten der jeweiligen Objekte, zur Ermittlung der Benutzerposition und dessen Blickwinkel auf die jeweiligen Objekte und zur Zuordnung von Benutzerinformationen zu den Ortskoordinaten auf. Das System weist zudem eine Visualisierungseinheit zur lagerichtigen Einblendung der Benutzerinformationen in das Sichtfeld des Benutzers auf. Erfindungsgemäß weist das System ein Schreib-/Lesegerät zum berührungslosen Auslesen der Trackinginformationen aus zumindest einem mobilen Datenspeicher, welcher hierzu am jeweiligen zu erfassenden Objekt angebracht ist, auf. Der große Vorteil ist, dass neue Trackinginformationen sofort nach einem Neustart des Systems, bei schnellen Positions- und Blickwinkeländerungen und bei sich ändernden Umgebungsverhältnissen ausgelesen und verarbeitet werden können. Einem Benutzer können sofort die zugehörigen Benutzerinformationen in das Sichtfeld eingeblendet werden.

## Patentansprüche

1. System zur Darstellung von Augmented-Reality-Benutzerinformationen (5), mit
a) einer Datenbrille (4) auf Basis eines optischen Durchsichtverfahrens, welche eine Kamera (41) zur Erfassung von Objekten (3) als Bildinformationen eines Ausschnitts einer Umgebung sowie eine Anzeigevorrichtung (61) zur lagerichtigen Einblendung der Benutzerinformationen (5) in das Sichtfeld (SF) des Benutzers (2) aufweist,
b) einer Bildverarbeitungseinheit (7)
- zur Identifikation der erfassten Objekte (3) und Rekonstruktion derer dreidimensionalen Abbilder (31) in einem virtuellen dreidimensionalen Raum auf Basis von im System hinterlegten zugehörigen als Trackinginformationen (INF) abgespeicherten 3D-Modelldaten,
- zur Berechnung der Ortskoordinaten (POS) der jeweiligen Objekte (3) durch Vergleich der erfassten Objekte mit den zugehörigen dreidimensionalen Abbildern (31),
- zur Ermittlung der Benutzerposition und dessen Blickwinkel auf die jeweiligen Objekte (3) im virtuellen dreidimensionalen Raum durch Vergleich der erfassten Objekte mit den zugehörigen dreidimensionalen Abbildern (31) und
- zur Zuordnung der Benutzerinformationen (5) zu den Ortskoordinaten,
c) zumindest einem mobilen Datenspeicher (91), welcher hierzu am jeweiligen zu erfassenden Objekt (3) angebracht ist, und
d) einem Schreib-/Lesegerät (9) zum berührungslosen Auslesen der Trackinginformationen (INF) aus dem mobilen Datenspeicher (91)
**dadurch gekennzeichnet,**
**dass** auf dem zumindest einen mobilen Datenspeicher (91) die besagten 3D-Modelldaten (3D) der Objekte (3) als Trackinginformationen abgespeichert sind.

2. System nach Anspruch 1, **dadurch gekennzeichnet, dass** der zumindest eine mobile Datenspeicher (91) zum Beschreiben mit aktualisierten Trackinginformationen (INF) ausgebildet sind.

3. System nach Anspruch 1 oder 2, **dadurch gekennzeichnet, dass** das System mit anderweitig verfügbaren datentechnischen Informationssystemen zur Erfassung von weiteren Trackinginformationen (INF) verbunden ist.

4. System nach einem der vorangegangenen Ansprüche, **dadurch gekennzeichnet, dass** die Trackinginformationen (INF) eine Kennung (ID) und/oder Fotos (PIC) und/oder Erkennungsmarkierungen (MARK) der jeweiligen Objekte (3) aufweisen.

5. System nach einem der vorangegangenen Ansprüche, **dadurch gekennzeichnet, dass** die Trackinginformationen (INF) Konfigurationsdaten (CONF) zur Kennzeichnung von Änderungen des jeweiligen Objekts (3) hinsichtlich dessen Konfiguration sind.

6. System nach Anspruch 4, **dadurch gekennzeichnet, dass** die Trackinginformationen (INF) Umgebungsparameter (ENV) aufweisen, anhand derer in Abhängigkeit von den jeweils vorliegenden Umgebungsbedingungen des jeweiligen Objekts (3) geeignete 3D-Modelldaten (3D) und/oder Fotos (PIC) und/oder charakteristische Merkmale (MARK) auswählbar sind.

7. System nach einem der vorangegangenen Ansprüche, **gekennzeichnet durch** eine Bewertungseinheit (8) zur Analyse der aktuellen Umgebungsbedingungen sowie durch die Bildverarbeitungseinheit (7) zum Auslesen von entsprechend dazu geeigneten Trackinginformationen (INF) aus dem zumindest einen mobilen Datenspeicher (91) und/oder zum Beschreiben des zumindest einen mobilen Datenspeichers (91) mit an die aktuellen Umgebungsbedingungen angepassten Trackinginformationen (INF') mittels des Schreib-/Lesegeräts (9).

8. System nach einem der vorangegangenen Ansprüche, **dadurch gekennzeichnet, dass** die Datenübertragung zwischen dem Schreib-/Lesegerät (9) und dem zumindest einen mobilen Datenspeicher (91) auf Mikrowellen basiert.

9. System nach Anspruch 8, **dadurch gekennzeichnet, dass** das Schreib-/Lesegerät (9) einen gerichteten Erfassungsbereich (EB) aufweist.

10. Verfahren zur Darstellung von Augmented-Reality-Benutzerinformationen (5), bei welchem
- Objekte (3) als Bildinformationen eines Ausschnitts einer Umgebung mittels einer an einer auf einem optischen Durchsichtverfahren basierenden Datenbrille (4) angeordneten Kamera (41) erfasst werden,
- die erfassten Objekte (3) identifiziert und dreidimensionale Abbilder (31) derer in einem virtuellen dreidimensionalen Raum auf Basis von im System hinterlegten zugehörigen als Trackinginformationen (INF) abgespeicherten 3D-Modelldaten rekonstruiert werden,
- Ortskoordinaten (POS) der jeweiligen Objekte (3) durch Vergleich der erfassten Objekte mit den zugehörigen dreidimensionalen Abbildern (31) berechnet werden,
- die Benutzerposition und dessen Blickwinkel auf die jeweiligen Objekte (3) in dem virtuellen dreidimensionalen Raum durch Vergleich der erfassten Objekte mit den zugehörigen dreidimensionalen Abbildern (31) ermittelt werden,
- die Benutzerinformationen (5) zu den Ortskoordinaten (POS) zugeordnet werden,
- die Benutzerinformationen (5) mittels einer Anzeigevorrichtung (61) der Datenbrille (4) lagerichtig in das Sichtfeld (SF) des Benutzers (2) eingeblendet werden, und
- mobile Datenspeicher (91), die hierzu am jeweiligen zu erfassenden Objekt (3) angebracht sind
- die Trakinginformationen (INF) mittels eines Schreib-/Lesegerätes (9) aus dem mobilen Datenspeicher (91) berührungslos ausgelesen werden,
**dadurch gekennzeichnet, dass** auf dem zumindest einen mobilen Datenspeicher (91) die besagten 3D-Modelldaten (3D) der Objekte (3) als Trackinginformationen abgespeichert werden.

11. Verfahren nach Anspruch 10, **dadurch gekennzeichnet, dass** der zumindest eine mobile Datenspeicher (91) mit aktualisierten Trackinginformationen (INF) beschrieben wird.

12. Verfahren nach Anspruch 10 oder 11, **dadurch gekennzeichnet, dass** das System mit anderweitigen verfügbaren datentechnischen Informationssystemen verbunden wird, um weitere Trackinginformationen (INF) zu erfassen.

13. Verfahren nach einem der Ansprüche 10 bis 12, **dadurch gekennzeichnet, dass** die Trackinginformationen (INF) Fotos (PIC) und/oder Erkennungsmarkierungen (MARK) der jeweiligen Objekte (3) aufweisen.

14. Verfahren nach einem der Ansprüche 10 bis 13, **dadurch gekennzeichnet, dass** die Trackinginformationen (INF) Konfigurationsdaten (CONF) sind, welche Änderungen des jeweiligen Objekts (3) hinsichtlich dessen Konfiguration kennzeichnen.

15. Verfahren nach Anspruch 13, **dadurch gekennzeichnet, dass** die Trackinginformationen (INF) Umgebungsparameter (ENV) aufweisen, anhand derer in Abhängigkeit von den jeweils vorliegenden Umgebungsbedingungen des jeweiligen Objekts (3) passende 3D-Modelldaten (3D) und/oder Fotos (PIC) und/oder charakteristische Merkmale (MARK) ausgewählt werden.

16. Verfahren nach Anspruch 15, **dadurch gekennzeichnet, dass** die aktuellen Umgebungsbedingungen analysiert werden, dass hierzu entsprechend geeignete Trackinginformationen (INF) aus dem zumindest einen mobilen Datenspeicher (91) ausgelesen werden und/oder dass der zumindest eine mobile Datenspeicher (91) mit an den aktuellen Umgebungsbedingungen angepassten Trackinginformationen (INF') beschrieben wird.

17. Verfahren nach einem der Ansprüche 10 bis 16, **dadurch gekennzeichnet, dass** die Datenübertragung zwischen dem Schreib-/Lesegerät (9) und dem zumindest einen mobilen Datenspeicher (91) mittels Mikrowellen erfolgt.

18. Verfahren nach einem der Ansprüche 10 bis 17, **dadurch gekennzeichnet, dass** ein Erfassungsbereich (EB) des Schreib-/Lesegeräts (9) im Wesentlichen in Richtung des Blickwinkels des Benutzers (2) ausgerichtet ist.

## Claims

1. System for displaying augmented reality user information (5), with
a) data glasses (4) based on an optical viewing method, which have a camera (41) for detecting objects (3) as image information from a section of an environment and a display apparatus (61) for the positionally-correct superimposition of the user information (5) into the field of view (SF) of the user (2),
b) an image processing unit (7)
- for identifying the detected objects (3) and reconstructing the three-dimensional images (31) thereof in a virtual three-dimensional space on the basis of associated 3D model data stored in the system as tracking information (INF),
- for calculating the location coordinates (POS) of the respective objects (3), by comparing the detected objects with the associated three-dimensional images (31),
- for determining the user position and the angle of view thereof onto the respective objects (3) in the virtual three-dimensional space by comparing the detected objects with the associated three-dimensional images (31) and
- for assigning the user information (5) to the location coordinates
c) and at least one mobile data memory (91), which is attached for this purpose to the respective object (3) to be detected, and
d) a read/write device (9) for the contactless reading out of tracking information (INF) from the mobile data memory (91)
**characterised in that**
the said 3D model data (3D) of the objects (3) is stored on the at least one mobile data memory (91) as tracking information.

2. System according to claim 1, **characterised in that** the at least one mobile data memory (91) is embodied for writing in updated tracking information (INF).

3. System according to claim 1 or 2, **characterised in that** the system is connected to otherwise available data-specific information systems for detecting further tracking information (INF).

4. System according to one of the preceding claims, **characterised in that** the tracking information (INF) has an identifier (ID) and/or photos (PIC) and/or identification markings (MARK) of the respective objects (3).

5. System according to one of the preceding claims, **characterised in that** the tracking information (INF) is configuration data (CONF) for identifying changes in the respective object (3) in respect of the configuration thereof.

6. System according to claim 4, **characterised in that** the tracking information (INF) has environment parameters (ENV), on the basis of which suitable 3D model data (3D) and/or photos (PIC) and/or characteristic features (MARK) can be selected as a function of the respectively available environmental conditions of the respective object (3).

7. System according to one of the preceding claims, **characterised by** an evaluation unit (8) for analysing the current environmental conditions and by the image processing unit (7) for reading out suitable tracking information (INF) corresponding thereto from the at least one mobile data memory (91) and/or for writing tracking information (INF') adjusted to the current environment conditions to the at least one mobile data memory (91), by means of the write/read device (9).

8. System according to one of the preceding claims, **characterised in that** the data transmission between the write/read device (9) and the at least one mobile data memory (91) is based on microwaves.

9. System according to claim 8, **characterised in that** the write/read device (9) has a directional detection range (EB).

10. Method for displaying augmented reality user information (5), in which
- objects (3) are detected as image information from a section of an environment by means of a camera (41) arranged on data glasses (4) based on an optical viewing method,
- the detected objects (3) are identified and three-dimensional images (31) thereof are reconstructed in a virtual three-dimensional space on the basis of associated 3D model data stored in the system as tracking information (INF),
- location coordinates (POS) of the respective objects (3) are calculated by comparing the detected objects with the associated three-dimensional images (31),
- the user position and the angle of view thereof onto the respective objects (3) are determined in the virtual three-dimensional space by comparing the detected objects with the associated three-dimensional images (31),
- the user information (5) is assigned to the location coordinates (POS),
- the user information (5) is superimposed in a positionally-correct fashion into the field of view (SF) of the user (2) by means of a display apparatus (61) of the data glasses (4), and
- mobile data memories (91) which are attached for this purpose to the respective object (3) to be detected,
- tracking information (INF) is read out of the mobile data memory (91) in a contactless fashion by means of a write/read device (9)
**characterised in that**
the said 3D model data (3D) of the objects (3) is stored on the at least one mobile data memory (91) as tracking information.

11. Method according to claim 10, **characterised in that** updated tracking information (INF) is written to the at least one mobile data memory (91).

12. Method according to claim 10 or 11, **characterised in that** the system is associated with otherwise available data-specific information systems in order to detect further tracking information (INF).

13. Method according to one of claims 10 to 12, **characterised in that** the tracking information (INF) has photos (PIC) and/or identification markers (MARK) of the respective objects (3).

14. Method according to one of claims 10 to 13, **characterized in that** the tracking information (INF) is configuration data (CONF), which identifies changes to the respective object (3) in respect of its configuration.

15. Method according to claim 13, **characterized in that** the tracking information (INF) has environment parameters (ENV), on the basis of which suitable 3D model data (3D) and/or photos (PIC) and/or characteristic features (MARK) are selected as a function of the respectively available environment conditions of the respective object (3).

16. Method according to claim 15, **characterized in that** the current environment conditions are analysed, suitable tracking information (INF) corresponding thereto is read out from the at least one mobile data memory (91) and/or that tracking information (INF') adjusted to the current environment conditions is written to at least one mobile data memory (91).

17. Method according to one of claims 10 to 16, **characterized in that** the data transmission between the write/read device (9) and the at least one mobile data memory (91) takes place by means of microwaves.

18. Method according to one of claims 10 to 17, **characterized in that** a detection region (EB) of the write/read device (9) is essentially aligned in the direction of the angle of view of the user (2).

## Revendications

1. Système pour représenter des informations utilisateur de réalité augmentée (5), comportant
a) des lunettes de données (4) sur la base d'un procédé de transparence optique, lesquelles comportent une caméra (41) pour saisir des objets (3) en tant qu'informations de type images d'un extrait d'un environnement ainsi qu'un dispositif d'affichage (61) pour visualiser les informations utilisateur (5) dans la position correcte dans le champ de vision (SF) de l'utilisateur (2),
b) une unité de traitement d'images (7)
- pour identifier les objets saisis (3) et reconstruire leurs images tridimensionnelles (31) dans un espace tridimensionnel virtuel sur la base de données de modèles tridimensionnels associées stockées en tant qu'informations de suivi et déposées dans le système,
- pour calculer les coordonnées locales (POS) des objets respectifs (3) par comparaison des objets saisis avec les images tridimensionnelles associées (31),
- pour déterminer la position de l'utilisateur et son angle de vision sur les objets respectifs (3) dans l'espace tridimensionnel virtuel par comparaison des objets saisis avec les images tridimensionnelles associées (31) et
- pour associer les informations utilisateur (5) aux coordonnées locales,
c) au moins une mémoire de données mobile (91) qui est montée à cet effet sur l'objet respectif à saisir (3) et
d) un appareil d'écriture / lecture (9) pour lire sans contact les informations de suivi (INF) hors de la mémoire de données mobile (91),
**caractérisé en ce que**
lesdites données de modèles tridimensionnels (3D) des objets (3) sont stockées en tant qu'informations de suivi sur l'au moins une mémoire de données mobile (91).

2. Système selon la revendication 1, **caractérisé en ce que** l'au moins une mémoire de données mobile (91) est réalisée pour y écrire des informations de suivi actualisées (INF).

3. Système selon la revendication 1 ou 2, **caractérisé en ce que** le système est relié à des systèmes d'informations techniques de données autrement disponibles pour saisir d'autres informations de suivi (INF).

4. Système selon l'une des revendications précédentes, **caractérisé en ce que** les informations de suivi (INF) comportent un identifiant (ID) et/ou des photos (PIC) et/ou des marquages de reconnaissance (MARK) des objets respectifs (3).

5. Système selon l'une des revendications précédentes, **caractérisé en ce que** les informations de suivi (INF) sont des données de configuration (CONF) pour indiquer des modifications de l'objet respectif (3) concernant la configuration de celui-ci.

6. Système selon la revendication 4, **caractérisé en ce que** les informations de suivi (INF) comportent des paramètres d'environnement (ENV) à l'aide desquels il est possible de sélectionner des données de modèles tridimensionnels (3D) et/ou des photos (PIC) et/ou des caractéristiques (MARK) appropriées en fonction des conditions d'environnement de l'objet respectif (3) respectivement existantes.

7. Système selon l'une des revendications précédentes, **caractérisé par** une unité d'évaluation (8) pour l'analyse des conditions d'environnement actuelles ainsi que par l'unité de traitement d'images (7) pour lire des informations de suivi (INF) appropriées à cet effet hors de l'au moins une mémoire de données mobile (91) et/ou pour écrire dans l'au moins une mémoire de données mobile (91) des informations de suivi (INF') adaptées aux conditions d'environnement actuelles au moyen de l'appareil d'écriture / lecture (9).

8. Système selon l'une des revendications précédentes, **caractérisé en ce que** la transmission de données entre l'appareil d'écriture / lecture (9) et l'au moins une mémoire de données mobile (91) repose sur des micro-ondes.

9. Système selon la revendication 8, **caractérisé en ce que** l'appareil d'écriture / lecture (9) comporte une zone de saisie orientée (EB).

10. Procédé pour représenter des informations utilisateur de réalité augmentée (5), dans lequel
- des objets (3) sont saisis en tant qu'informations de type images d'un extrait d'un environnement au moyen d'une caméra (41) située sur des lunettes de données (4) basées sur un procédé de transparence optique,
- les objets saisis (3) sont identifiés et des images tridimensionnelles (31) de ceux-ci sont reconstruites dans un espace tridimensionnel virtuel sur la base de données de modèles tridimensionnels associées stockées en tant qu'informations de suivi (INF) et déposées dans le système,
- des coordonnées locales (POS) des objets respectifs (3) sont calculées par comparaison des objets saisis avec les images tridimensionnelles associées (31),
- la position de l'utilisateur et son angle de vision sur les objets respectifs (3) sont déterminés dans l'espace tridimensionnel virtuel par comparaison des objets saisis avec les images tridimensionnelles associées (31),
- les informations utilisateur (5) sont associées aux coordonnées locales (POS),
- les informations utilisateur (5) sont visualisées au moyen d'un dispositif d'affichage (61) des lunettes de données (4) dans la position correcte dans le champ de vision (SF) de l'utilisateur (2) et
- des mémoires de données mobiles (91) sont disposées à cet effet sur l'objet respectif à saisir (3),
- les informations de suivi (INF) sont lues sans contact au moyen d'un appareil d'écriture /lecture (9) hors de la mémoire de données mobile (91),
**caractérisé en ce que**
lesdites données de modèles tridimensionnels (3D) des objets (3) sont stockées en tant qu'informations de suivi sur l'au moins une mémoire de données mobile (91).

11. Procédé selon la revendication 10, **caractérisé en ce que** des informations de suivi actualisées (INF) sont écrites dans l'au moins une mémoire de données mobile (91).

12. Procédé selon la revendication 10 ou 11, **caractérisé en ce que** le système est relié à des systèmes d'informations techniques de données autrement disponibles pour saisir d'autres informations de suivi (INF).

13. Procédé selon l'une des revendications 10 à 12, **caractérisé en ce que** les informations de suivi (INF) comportent des photos (PIC) et/ou des marquages de reconnaissance (MARK) des objets respectifs (3).

14. Procédé selon l'une des revendications 10 à 13, **caractérisé en ce que** les informations de suivi (INF) sont des données de configuration (CONF) qui indiquent des modifications de l'objet respectif (3) concernant la configuration de celui-ci.

15. Procédé selon la revendication 13, **caractérisé en ce que** les informations de suivi (INF) comportent des paramètres d'environnement (ENV) à l'aide desquels sont sélectionnées des données de modèles tridimensionnels (3D) et/ou des photos (PIC) et/ou des caractéristiques (MARK) en fonction des conditions d'environnement de l'objet respectif (3) respectivement existantes.

16. Procédé selon la revendication 15, **caractérisé en ce que** les conditions d'environnement actuelles sont analysées, **en ce que** des informations de suivi (INF) appropriées à cet effet sont lues hors de l'au moins une mémoire de données mobile (91) et/ou **en ce que** des informations de suivi (INF') adaptées aux conditions d'environnement actuelles sont écrites dans l'au moins une mémoire de données mobile (91).

17. Procédé selon l'une des revendications 10 à 16, **caractérisé en ce que** la transmission de données entre l'appareil d'écriture / lecture (9) et l'au moins une mémoire de données mobile (91) s'effectue au moyen de micro-ondes.

18. Procédé selon l'une des revendications 10 à 17, **caractérisé en ce qu'**une zone de saisie (EB) de l'appareil d'écriture / lecture (9) est orientée sensiblement en direction de l'angle de vision de l'utilisateur (2).
